# FASCICULE DE BREVET EUROPEEN

(11) **EP 1 603 386 B1**
(45) Date de publication et mention de la délivrance du brevet: **18.04.2007**
(21) Numéro de dépôt: 04718988.1
(22) Date de dépôt: 10.03.2004
(51) Int. Cl.: A01K 61/00

(54) **PROCEDE D'AQUACULTURE**
AQUAKULTURVERFAHREN
METHOD FOR AQUACULTURE

(30) Priorité: 10.03.2003 FR 0302899; 23.06.2003 FR 0307585
(43) Date de publication de la demande: 14.12.2005
(73) Titulaire: INSTITUT FRANCAIS DE RECHERCHE POUR L'EXPLOITATION DE LA MER (IFREMER), 92138 Issy-les-Moulineaux Cedex (FR); Ribes, Gilbert, 34530 Montagnac (FR); Ribes, André, 34530 Montagnac (FR)
(72) Inventeur: RIBES, Gilbert, F-34530 Montagnac (FR); RIBES, André, F-34530 Montagnac (FR); BLANCHETON, Jean-Paul, F-34750 Villeneuve les Maguelone (FR); GASSET, Eric, F-34530 Clermont l'Hérault (FR)
(74) Mandataire: Thurgood, Alexander John
(86) Numéro de dépôt international: PCT/FR2004/000565
(87) Numéro de publication internationale: WO 2004/080165

(56) Documents cités:
- EP-A- 0 481 932
- WO-A-99/56534
- PROTEAU J.-P.; THOLLOT T.: 'Elevage intensif du Silure Glane en eau chaude' AQUA REVUE no. 21, 01 Octobre 1988, BORDEAUX (F),
- GASSET E.: 'Eléments d'information concernant l'élevage en circuit recyclé de Silurus Glanis' IFREMER PALAVAS-LES-FLOTS (F),

## Description

### DOMAINE D'APPLICATION DE L'INVENTION

La présente invention concerne l'aquaculture et notamment les adaptations permettant d'exploiter de façon optimisée les fonctionnalités d'un circuit fermé ou recyclé.

### DESCRIPTION DE L'ART ANTÉRIEUR

Les techniques conventionnelles actuellement mises en oeuvre dans les domaines de l'aquaculture - marine et continentale - rencontrent de sévères difficultés qui conduisent de plus en plus souvent à la mise en cause de leur pratique.

Ces difficultés sont essentiellement liées à des modes d'élevage étroitement intensifs qui entrent en contradiction avec les capacités et les aptitudes des espèces élevées dans des conditions environnementales particulièrement défavorables et contre-productives.

Les conséquences immédiates en sont notamment :
- l'abaissement de la qualité et de l'image comme cela se vérifie pour des espèces très appréciées à l'état sauvage, tels le saumon, la truite, etc...
- le recours intensif à la pharmacie vétérinaire avec des conséquences dommageables très préoccupantes pour la santé humaine.
- des incidences très négatives au niveau environnemental par la pollution génétique des espèces sauvages concernées par l'aquaculture ; par la pollution également des milieux aquatiques - espaces marins, cours d'eau - conduisant les pouvoirs publics à des attitudes restrictives pouvant aller jusqu'à l'interdiction d'exploiter.

Actuellement, et en raison de ces difficultés, le recours aux circuits recyclés - ou circuits fermés - apparaît comme une réponse appropriée.

L'utilisation d'un circuit recyclé à l'échelle de production permet notamment
* de réduire très considérablement les prélèvements sur les ressources en eau - dans un rapport qui peut être de 1 à 200 -
* de réduire "en proportion" le volume des effluents - dont le traitement peut alors être réalisé "sur place" -
* de faciliter la solution des problèmes sanitaires par la régénération et le recyclage du biotope - hors de la présence des sujets élevés - par des moyens mécaniques, physiques, chimiques, etc... De plus, l'élevage par circuit recyclé a pour autre avantage de permettre la régulation précise de différents paramètres particulièrement importants pour l'aquaculture à savoir, en dehors de la température, la photopériode, l'alimentation, etc...

La faiblesse des volumes d'eau nécessaires en permet économiquement le maintien en continu par chauffage à la température optimale de croissance de l'espèce élevée ; espèce qui, par conséquent, peut être tropicale ou tolérante pour ces conditions thermiques particulières : bar, daurades, etc... mais dont les "performances" notamment au plan de la croissance, de la taille finale, etc..., apparaissent "limitées" naturellement.

En effet, bien qu'une espèce telle que le bar tire parti de l'augmentation de la température que peut proposer un circuit recyclé, ses limitations naturelles, les rejets à gérer ainsi que les ressources et investissements nécessaires à une telle application font que la productivité d'un tel système est relativement faible.

Or, les espèces de la zone tempérée présentent habituellement des limitations naturelles beaucoup moins restrictives que celles des espèces sus-évoquées particulièrement celles de zone tempérée continentale telle Silurus Glanis.

Néanmoins, du fait même de leurs origines de telles espèces sont naturellement et biologiquement "incompatibles" avec des conditions de type tropical au moins au plan thermique comme les propose un circuit recyclé.

La demande de brevet n°WO99/56534 aux noms de Ribes André et Gilbert propose un procédé d'aquaculture notamment de Silurus Glanis qui consiste entre autre, à assurer le maintien en continu de la température de l'eau utilisée pendant le cycle biologique à une température correspondant à l'optimum thermique de croissance de l'espèce élevée. Ce maintien de la température permet de faire bénéficier les sujets élevés de conditions "thermiquement tropicales" auxquelles ils ne sont pas naturellement adaptés. En effet, une des contraintes naturelles de la biologie des animaux des milieux aquatiques de là zone tempérée réside précisément dans le fait qu'en situation naturelle, ils n'ont d'activité biologique, et notamment de croissance, que saisonnièrement pendant une période donnée de l'année, à savoir lorsque la température de l'eau a atteint, puis dépassé, un certain seuil thermique, différent pour chaque espèce. Au-dessus de ce seuil, l'activité biologique, notamment la croissance, s'accroît avec l'élévation de la température, jusqu'à devenir maximale pour une température donnée différente pour chaque espèce. Cette température correspond à l'optimum thermique biologique de l'espèce. En proposant un maintien de la température pendant le cycle biologique à une température la plus proche possible de l'optimum thermique de croissance, le procédé essaye d'exploiter au maximum et continuellement le taux de croissance du poisson élevé qu'il n'adopte naturellement que saisonnièrement.

### DESCRIPTION DE L'INVENTION

Partant de cet état de fait, les demandeurs ont mené des recherches visant à exploiter les circuits fermés ou recyclés avec des espèces de la zone tempérée.

Ces recherches ont abouti à la conception d'un procédé d'aquaculture remarquable en ce qu'il consiste à élever à température constante, au moyen d'un circuit recyclé de production, une espèce de la zone tempérée préalablement adaptée à une température constante appliquée de manière continue et correspondant à son optimum thermique.

L'objet de l'invention est donc de réaliser l'élevage en circuit recyclé d'espèces naturellement et biologiquement "incompatibles" avec des conditions de type tropical au plan thermique, mais très performantes. Ces performances ne sont possibles que dans le cadre de la mise en oeuvre d'une espèce de poisson de la zone tempérée préalablement adaptée.

Cette adaptation consiste à créer des sujets de la zone tempérée acceptant et valorisant le maintien d'une température ce qui ne correspond pas à ce qu'ils connaissent naturellement. Cette adaptation est particulièrement intéressante lorsque l'espèce élevée est adaptée à une température qui correspond à son optimum thermique de croissance.

Elle permet, par conséquent, d'utiliser en continu des taux de croissance exceptionnellement élevés, parce que naturellement saisonniers et discontinus et qui, en outre, peuvent correspondre à des espèces géantes, comme Silurus Glanis.

Les moyens correspondants de l'invention résident dans la parfaite adaptation aux conditions au moins thermiquement tropicales de l'espèce élevée, préalablement à son utilisation en circuit recyclé.

Elle modifie profondément la biologie et le comportement de l'espèce concernée, par exemple Silurus Glanis, aux plans de la reproduction, de la production de réserves lipidiques, et de la qualité de la chair, etc....

En outre, elle "potentialise" considérablement l'espèce concernée, adaptée à de nouvelles conditions de biotope et dont les défenses immunitaires permettent alors, pour Silurus Glanis, de ne plus avoir recours à la pharmacie vétérinaire, pour la totalité du cycle biologique. Un exemple de méthode d'adaptation est constituée par le procédé décrit dans la demande de brevet n°WO99/56534.
Le circuit recyclé permet non seulement de maintenir de façon optimisée la température mais également d'agir sur les paramètres tel l'éclairage qui permet également de reproduire pour le poisson, une intensité lumineuse et une période de luminosité adaptées pour optimiser son comportement et sa croissance. Ainsi, l'apport du circuit recyclé ne se réduit pas à une meilleure régulation ou meilleur contrôle du paramètre de la température mais assure une maîtrise et une homogénéité de l'ensemble des conditions d'élevage, qui ne se retrouvent pas dans un circuit ouvert.

Cette application du circuit recyclé à l'élevage d'un poisson de la zone tempérée notamment d'un poisson dont le biotope est géographiquement isolé et soumis à la saisonnalité, n'est pas évidente en ce que le circuit recyclé n'était jusqu'ici envisagé que pour des espèces qui, naturellement, cherchent dans la mesure du possible un biotope présentant une faible variation de la température tels le bar et la dorade. L'application du circuit recyclé proposée par l'invention constitue donc une grande évolution par rapport à ce qui est généralement réalisé et admis dans ce domaine. Ainsi par exemple, selon une caractéristique particulièrement avantageuse de l'invention, les sujets élevés sont d'une espèce de poisson d'eau douce. Selon une autre caractéristique particulièrement avantageuse, les sujets élevés sont d'une espèce de poisson de la zone tempérée continentale, subissant en milieu naturel de fortes variations de température.

La mise en place pour l'espèce de la zone tempérée élevée de conditions environnementales régulées correspondant à son plus fort taux de croissance présente des avantages sur le fonctionnement du circuit recyclé lui-même. En effet, le taux de conversion des aliments étant particulièrement élevé, la quantité des rejets que doit gérer le circuit recyclé est particulièrement faible ce qui induit:
- une meilleure filtration,
- une plus grande durée de vie des équipements de filtration,
- un taux de renouvellement de l'eau particulièrement faible.

De plus, le taux de croissance peut être amélioré d'une autre façon. En effet, selon une caractéristique particulièrement avantageuse de l'invention, les sujets de l'espèce élevée sont triploïdes. L'absence d'activité de reproduction, conséquence de la triploïdie assure que la totalité de l'énergie consommée par le sujet élevé sera consacrée à sa croissance qui sera beaucoup plus rapide et économique que celle du même sujet diploïde. Ainsi, l'élevage en circuit recyclé de sujets triploïdes permet d'encore optimiser l'élevage de poissons préalablement adaptés de zone tempérée que permet le milieu particulier constitué par le circuit recyclé.

Selon une autre caractéristique particulièrement avantageuse de l'invention, l'espèce élevée est Silurus Glanis. De par les limitations naturelles beaucoup moins restrictives définies par une telle espèce, et au delà des avantages classiques du circuit recyclé - aux plans des données environnementales et de l'économie des ressources en eau - l'invention appliquée à une telle espèce permet d'atteindre, du fait des conditions constantes et optimales de température et de salinité notamment, une très grande sécurité et une productivité exceptionnellement élevée, notamment en terme de charge (supérieure ou égale à 200 kg par mètre cube) et de vitesse de croissance.

Un autre objet de l'invention concerne les produits obtenus selon ledit procédé.

Les concepts fondamentaux de l'invention venant d'être exposés ci-dessus dans leur forme la plus élémentaire, d'autres détails et caractéristiques ressortiront plus' clairement à la lecture de la description qui suit donnant à titre d'exemple non limitatif, un mode de réalisation d'un procédé d'aquaculture de Silurus Glanis conforme à l'invention.

### DESCRIPTION D'UN MODE DE RÉALISATION

Un exemple de système d'élevage de Silurus préalablement adapté peut être le suivant :

Le circuit recyclé d'élevage est situé dans un bâtiment ce qui autorise un contrôle total de la luminosité.

Le circuit d'élevage de Silurus Glanis préalablement adapté est composé de bassins octogonaux ou cylindriques à évacuation centrale avantageusement munis de pièges à particules.

L'eau sortant des bassins est envoyée sur au moins un filtre de type tambour.

Associé à cette filtration mécanique, le circuit d'élevage est avantageusement équipé d'un bac tampon dans lequel se trouve une colonne de dégazage. L'eau est pompée et envoyée en tête de colonne. Une fois retombée dans le bac tampon, l'eau est aspirée par des pompes de recirculation générale.

A ce stade, l'eau passe dans un module de régulation de la température comprenant un échangeur et un dispositif de régulation (régulateur de vanne proportionnelle). Conformément aux spécificités du procédé d'adaptation de Silurus Glanis connu dans l'art antérieur, le module de régulation de la température du circuit recyclé de l'invention assure le maintien en continu de la température de l'eau utilisée pendant le cycle biologique à une température correspondant à l'optimum thermique de croissance de l'espèce élevée, c'est à dire la plus proche possible de 26 ° celcius.

Suivant la saison et la température de l'eau utilisée dans l'élevage, l'échangeur est branché sur une boucle d'eau froide ou d'eau chaude pour refroidir ou réchauffer l'eau de l'élevage.

Selon le mode de réalisation préféré, le circuit recyclé comporte en outre des moyens de stérilisation qui sont constitués par des lampes de type Ultra Violet.

L'eau vient ensuite passer dans un filtre biologique nitrifiant éventuellement alimenté en entrée par de l'oxygène pour maintenir une activité bactérienne optimale. Un surpresseur placé après le filtre biologique envoie l'eau sous pression dans au moins un cône de suroxygénation connecté d'autre part à une réserve d'oxygène. Ce cône de suroxygénation permet de réguler à la demande la quantité d'oxygène envoyée dans l'eau (des sondes mesurent la concentration en oxygène dans l'eau des bassins. Si cette concentration chute sous une valeur seuil le cône injecte une plus grande quantité d'oxygène dans l'eau. L'eau suroxygénée est renvoyée dans les bassins.

L'arrivée éventuelle d'eau neuve dans le circuit se fait au niveau du bac tampon. Elle est réglée en fonction de la biomasse en élevage et donc de la quantité d'aliment distribuée. Le circuit recyclé de l'invention comporte également plusieurs procédures de sécurité.

L'élevage dans l'installation décrite ci-dessus concerne au départ, des poissons de 10 grammes environ.

Selon un mode de fonctionnement préféré, le taux d'oxygène maintenu dans les bassins est de 6,5 milligrammes par litre soit 80 % de saturation en oxygène dans nos conditions de température et de salinité.

La distribution alimentaire est automatique. Selon un mode de réalisation préféré, des distributeurs cylindroconiques fixés aux bassins et dans lesquels la quantité d'aliment pour 24 heures est versée, assurent cette distribution. L'intervalle de temps ainsi que la durée de distribution entre chaque période de distribution font l'objet d'un réglage. Conformément aux principes du circuit recyclé, les poissons sont alimentés en permanence.

Le renouvellement de l'eau est avantageusement ajusté en fonction de la charge en poisson. Dans le cadre de l'invention, un renouvellement de 100 % est rapidement atteint créant ainsi un courant d'eau à l'intérieur des bassins. Or, bien que Silurus Glanis soit un poisson limnophile, les demandeurs ont pu constater que ce dernier s'adapte parfaitement aux courants des bassins.

Les salles d'élevage sont hermétiques à la lumière, ce qui permet de régler dans le cadre du procédé d'élevage de l'invention le cycle lumineux du circuit recyclé de façon à obtenir une phase d'obscurité longue (20 heures de nuit par 24 heures). Silurus Glanis ayant un comportement lucifuge, la prise alimentaire est meilleure lors des phases d'obscurité. Aussi, l'allongement de la phase d'obscurité permet une meilleure alimentation des poissons. La phase éclairée autorise l'entretien et la maintenance du circuit recyclé par l'éleveur. Ce mode d'élevage en salles hermétiques à la lumière associé au caractère particulier de Silurus Glanis a en conséquence permis la mise en place d'un nouveau cycle nycthéméral.

Le circuit recyclé offre des possibilités de suroxygénation et de contrôle de l'ensemble des paramètres de l'eau qui ont permis d'augmenter les charges en bassin. Silurus Glanis garde un comportement inchangé au cours de cette montée en charge. Les individus ont continué de s'alimenter normalement et aucune agressivité n'est apparue. L'association d'une technique d'élevage de type circuit recyclé à l'espèce Silurus Glanis préalablement adapté permet ainsi d'atteindre des taux de charges particulièrement élevés, à savoir supérieurs à 200 kilogrammes par mètre cube.

Expérimentalement, les demandeurs obtiennent 1200 grammes de moyenne pour Silurus Glanis à 180 jours de sa naissance contre 50 grammes pour le bar dans l'art antérieur. De plus, la qualité des produits est très élevée, supérieure à celle des produits homologues naturels, et la sécurité sanitaire est illustrée par le non-recours à la pharmacie vétérinaire.

Ainsi, l'adaptation de la matière d'oeuvre que constitue le poisson à élever élimine les difficultés techniques impossibles à surmonter jusqu'ici par les techniques habituelles. En effet, dans le cas Silurus Glanis adapté, le rendement "biologique" (notamment le taux de conversion de l'aliment) est très supérieur à celui du bar (par exemple) ce qui entraîne un taux de rejet particulièrement faible, un renouvellement limité de l'eau et une meilleure économie des moyens de filtration, etc... Effectivement, les poissons adaptés élevés en circuit recyclé exploitent la quasi totalité de la nourriture qui leur est donnée pour développer leurs tissus.

Un autre avantage lié à l'application du circuit recyclé à Silurus Glanis adapté réside dans le comportement de ladite espèce qui présente des aspects fortement grégaires. Ainsi, les conditions d'élevage dans un volume clos et réduit que peut proposer un circuit recyclé n'influent pas négativement sur le comportement du Silure, bien au contraire. Ainsi, alors que l'augmentation de la charge dans le cadre d'un élevage conventionnel ou en circuit recyclé d'un poisson conventionnel constitue une source d'inconvénients, une spécificité de l'élevage de Silurus Glanis par circuit recyclé réside dans la forte charge qu'il peut non seulement supporter mais qu'il requiert. Aussi, contrairement à ce qui est communément admis en aquaculture en circuit recyclé, une caractéristique du procédé de l'invention consiste à gérer la biomasse en élevage pour atteindre une charge supérieure ou égale à deux cent kilogrammes par mètre cube à l'intérieur du circuit recyclé.

Aussi, les caractéristiques de la combinaison entre le circuit recyclé et le procédé d'aquaculture décrit dans la demande de brevet précitée renforcent mutuellement leurs effets, de sorte qu'un nouveau résultat technique et économique se trouve réalisé rendant ainsi viables des solutions de circuit recyclé jusqu'ici impossibles à réaliser de façon opératoire et rentable avec l'espèce non adaptée.

L'application à une espèce de poisson de la zone tempérée de façon générale et à Silurus Glanis plus particulièrement, permet de faire évoluer plusieurs paramètres auxquels sont classiquement confrontés les utilisateurs d'un circuit recyclé.

Ainsi, par exemple, il apparaît que l'hydrodynamique mise en place pour la filtration notamment, la gestion du mucus, l'alimentation et la photopériode sont des paramètres qui dans le cadre de l'élevage de Silurus Glanis présentent des spécificités aussi bien fonctionnelles que structurelles.

En effet, dans la nature Silurus Glanis séjourne essentiellement en eaux profondes, très calmes et le plus souvent pratiquement statiques. Ainsi, dans l'art antérieur en élevage conventionnel la vitesse de l'eau est considérée comme un facteur très négatif même si dans les bassins concernés des zones de moindre courant existent et peuvent atténuer l'inconvénient. Le principe du circuit recyclé impose techniquement une vitesse élevée de l'eau en relation avec un taux de renouvellement aux environs de 100 % par heure qui est lui-même fonction du taux d'alimentation et de charges. L'élevage par circuit recyclé d'un poisson de type Silurus Glanis n'est donc pas évident en regard des conditions naturelles de circulation ou de renouvellement de l'eau du milieu dans lequel il vit naturellement. Le taux d'alimentation et le taux de charges sont particulièrement élevés s'agissant de Silurus Glanis préalablement adapté à des conditions thermiques de type tropical. Dans le cadre de l'invention, la maîtrise et la gestion de cette vitesse de l'eau par le circuit recyclé et notamment son homogénéisation dans le volume sont les moyens efficaces d'une réalisation opératoire de l'aquaculture de Silurus Glanis.

En ce qui concerne, la gestion du mucus, il est important de rappeler que la propension de Silurus Glanis à produire d'abondantes quantités de mucus est considérée comme une difficulté majeure à son élevage notamment lorsque les sujets doivent être manipulés. La production de mucus est en outre classiquement considérée comme rédhibitoire pour un élevage en circuit recyclé. Or, cette donnée considérée à tort comme attachée à l'espèce elle-même, correspond en réalité à des réactions à des situations de stress résultant de paramètres incorrects du biotope, des manipulations ou de leur association.

La maîtrise totale du biotope grâce au procédé de l'invention, diminue les situations de stress ce qui permet de constater l'absence de mucus contribuant au succès d'un élevage par circuit recyclé de Silurus Glanis. Ainsi, le circuit recyclé règle, entre autres paramètres, la période de lumière afin d'éviter tout stress à l'animal élevé, participant ainsi à l'absence constatée de mucus.

Dans la nature Silurus Glanis vit en eau douce. La salinisation de l'élevage de Silurus Glanis préalablement adapté a permis d'établir ses capacités d'adaptation aux milieux saumâtres. Selon un mode de réalisation préféré, la salinité du circuit recyclé adapté à Silurus Glanis a été établie à un taux de l'ordre de 8 pour mille. Aussi, le procédé est remarquable en ce qu'il consiste à atteindre une salinité d'un taux de l'ordre de huit pour mille (8 ‰). Cette montée en salinité autorise une diminution des besoins en eau douce. Elle permet donc aussi l'installation de structures d'élevage dans des zones géographiques différentes de celles adaptées à l'élevage de poisson ne s'adaptant pas à une eau salée.

L'ensemble des maillons de traitement de l'eau et notamment le filtre biologique, maintiennent leur efficacité dans ces nouvelles conditions. En effet, au départ le filtre biologique accueille des populations bactériennes nitrifiantes adaptées à une salinité nulle. L'augmentation progressive de la salinité de l'ordre de un pour mille par jour jusqu'au taux annoncé assure notamment un maintien et une adaptation progressive de ces populations bactériennes permettant ainsi une efficacité constante de ce maillon de traitement. Silurus Glanis élevé dans ces conditions voit ses caractéristiques gustatives modifiées. Ce procédé d'élevage permet donc d'obtenir une modification du produit naturel pour proposer aux consommateurs une gamme gustative élargie.

Ainsi, selon une autre caractéristique particulièrement avantageuse de l'invention, le procédé est remarquable en ce que l'eau employée dans le circuit recyclé est salée, la salure étant contrôlée et gérée par le circuit- recyclé. Cette eau peut être obtenue de manière naturelle ou artificielle. L'élevage en circuit recyclé notamment d'un poisson d'eau douce dans de l'eau salée peut permettre une évolution gustative de la chair du poisson particulièrement intéressante commercialement , et potentialiser les moyens mis en oeuvre pour le contrôle et la gestion du biotope.

Une autre caractéristique constatée, réside dans l'action qu'a la présence du sel sur la qualité de l'eau en général. En effet, les demandeurs ont constaté que la transparence de l'eau lorsqu'elle est salée, est nettement supérieure à celle d'une eau non salée. La salure de l'eau constitue donc une caractéristique impliquant dans le cadre de l'invention des effets nouveaux allant au-delà de la simple- modification gustative, induisant ainsi de meilleures conditions de productivité tant pour l'espèce élevée que pour le circuit recyclé lui-même.

On comprend que le procédé d'aquaculture, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

## Revendications

1. Procédé d'aquaculture, **CARACTÉRISÉ EN CE QU**'il consiste à élever à température constante, au moyen d'un circuit recyclé de production, une espèce de poisson de la zone tempérée préalablement adaptée à une température constante appliquée de manière continue et correspondant à son optimum thermique.

2. Procédé d'aquaculture selon la revendication 1, **CARACTÉRISÉ EN CE QUE** les sujets élevés sont d'une espèce de poisson d'eau douce.

3. Procédé d'aquaculture selon la revendication 1, **CARACTÉRISÉ EN CE QUE** les sujets élevés sont d'une espèce de poisson de la zone tempérée continentale.

4. Procédé d'aquaculture selon la revendication 1, **CARACTÉRISÉ EN CE QUE** les sujets de l'espèce élevée sont triploïdes.

5. Procédé d'aquaculture selon la revendication 1, **CARACTÉRISÉ EN CE QUE** l'espèce élevée est Silurus Glanis.

6. Procédé d'aquaculture selon les revendications 1 et 2, **CARACTÉRISÉ EN CE QUE** l'eau employée dans le circuit recyclé est salée.

7. Procédé d'aquaculture selon la revendication 6, **CARACTÉRISÉ EN CE QU**'il consiste à atteindre une salinité d'un taux de l'ordre de huit pour mille (8 ‰).

8. Procédé d'aquaculture selon la revendication 1, **CARACTÉRISÉ EN CE QU**'il consiste à gérer la biomasse en élevage pour atteindre une charge supérieure ou égale à 200 kilogrammes par mètre cube.

## Claims

1. Aquaculture method, **characterised in that** it consists of farming at a constant temperature, by means of a recirculating production system, a fish species of the temperate zone previously adapted to a constant temperature applied continuously and corresponding to its optimum thermal conditions.

2. Aquaculture method according to claim 1, **characterised in that** the farmed subjects are a freshwater fish species.

3. Aquaculture method according to claim 1, **characterised in that** the farmed subjects are a fish species of the temperate continental zone.

4. Aquaculture method according to claim 1, **characterised in that** the farmed species subjects are triploids.

5. Aquaculture method according to claim 1, **characterised in that** the farmed species is Silurus Glanis.

6. Aquaculture method according to claims 1 and 2, **characterised in that** the water used in the recirculating system is salty.

7. Aquaculture method according to claim 6, **characterised in that** it consists of obtaining a salinity level of around eight per thousand (0.8 %).

8. Aquaculture method according to claim 1, **characterised in that** it consists of managing the biomass being farmed so as to obtain a population density greater than or equal to 200 kilograms per cubic meter.

## Patentansprüche

1. Aquakulturverfahren, **dadurch gekennzeichnet, dass** es darin besteht, eine Fischart der gemäßigten Zone, die zuvor an eine konstante Temperatur gewöhnt wurde, die kontinuierlich und an ihr thermisches Optimum angepasst ist, bei konstanter Temperatur mittels eines Recycling-Produktionskreislaufs zu züchten.

2. Aquakulturverfahren nach Anspruch 1, **dadurch gekennzeichnet, dass** die gezüchteten Tiere eine Süßwasserfischart sind.

3. Aquakulturverfahren nach Anspruch 1, **dadurch gekennzeichnet, dass** die gezüchteten Tiere eine Fischart der gemäßigten kontinentalen Zone sind.

4. Aquakulturverfahren nach Anspruch 1, **dadurch gekennzeichnet, dass** die Tiere der gezüchteten Art Triploide sind.

5. Aquakulturverfahren nach Anspruch 1, **dadurch gekennzeichnet, dass** die gezüchtete Art Silurus glanis ist.

6. Aquakulturverfahren nach Anspruch 1 und 2, **dadurch gekennzeichnet, dass** das im Recyclingkreislauf verwendete Wasser salzig ist.

7. Aquakulturverfahren nach Anspruch 6, **dadurch gekennzeichnet, dass** der zu erreichende Salzgehalt zirka 8 Promille (8 ‰) beträgt.

8. Aquakulturverfahren nach Anspruch 1, **dadurch gekennzeichnet, dass** bei Verwaltung der Zucht-Biomasse ein Besatz von über oder gleich 200 Kilogramm je Kubikmeter erreicht wird.
